(19) Europäisches Patentamt / European Patent Office / Office européen des brevets

(11) **EP 2 877 720 B1**

(12) **FASCICULE DE BREVET EUROPEEN**

(45) Date de publication et mention de la délivrance du brevet:
**11.05.2016 Bulletin 2016/19**

(21) Numéro de dépôt: **13731391.2**

(22) Date de dépôt: **07.06.2013**

(51) Int Cl.:
*F01N 3/20* (2006.01)       *F01N 3/035* (2006.01)
*F01N 3/033* (2006.01)       *F01N 9/00* (2006.01)

(86) Numéro de dépôt international:
**PCT/FR2013/051318**

(87) Numéro de publication internationale:
**WO 2013/190210 (27.12.2013 Gazette 2013/52)**

(54) **SYSTÈME DE TRAITEMENT DES GAZ D'ÉCHAPPEMENT COMPRENANT UN FILTRE À PARTICULES CATALYTIQUES, ET PROCÉDÉ CORRESPONDANT**

ABGASNACHBEHANDLUNGSSYSTEM MIT EINEM KATALYTISCHEN PARTIKELFILTER UND ENTSPRECHENDES VERFAHREN

EXHAUST GAS TREATMENT SYSTEM COMPRISING A CATALYTIC PARTICULATE FILTER, AND CORRESPONDING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2012 FR 1255743**

(43) Date de publication de la demande:
**03.06.2015 Bulletin 2015/23**

(73) Titulaire: **Renault S.A.S.**
**92100 Boulogne-Billancourt (FR)**

(72) Inventeurs:
• **MARIE-LUCE, David**
  **F-75014 Paris (FR)**
• **DI-PENTA, Damiano**
  **F-75013 Paris (FR)**

(56) Documents cités:
**FR-A1- 2 895 445     US-A1- 2007 277 507**

EP 2 877 720 B1

**Description**

La présente invention concerne un système et un procédé de traitement des gaz d'échappement, utilisant en particulier un filtre à particules catalytique capable de traiter des oxydes d'azote (NOx), notamment NO et NO$_2$. Plus précisément, l'invention concerne un système et un procédé pour traiter les oxydes d'azote pendant les phases de régénération thermique du filtre à particules catalytique.

Afin de répondre à la baisse des seuils admis pour les émissions de gaz polluants, des systèmes de traitement des gaz de plus en plus complexes sont disposés dans la ligne d'échappement des moteurs à mélange pauvre, notamment les moteurs diesels. Ces systèmes de post-traitement permettent notamment de réduire les émissions de particules et d'oxydes d'azote en plus du monoxyde de carbone et des hydrocarbures imbrûlés.

Le procédé de réduction catalytique sélective (en anglais : selective catalytic reduction SCR) est un procédé connu de traitement des oxydes d'azote NOx. Le procédé consiste en un traitement continu des émissions d'oxydes d'azote grâce à un catalyseur disposé dans la ligne d'échappement du moteur et à un agent réducteur injecté dans la ligne d'échappement. L'agent réducteur est généralement de l'ammoniac qui peut être injecté sous sa forme moléculaire ou sous forme d'urée. Dans ce dernier cas, l'urée est stockée dans un réservoir, dans le véhicule, et est injectée et mélangée aux gaz d'échappement avant d'entrer dans le catalyseur. Le catalyseur permet d'accélérer la réaction de réduction des oxydes d'azote par l'agent réducteur.

Par ailleurs, afin de limiter la quantité de particules dans les gaz d'échappement rejetés dans l'atmosphère, il est également connu d'utiliser un filtre à particules. Le filtre à particules peut être monté en série avec le catalyseur de réduction sélective des oxydes d'azote, ou bien peut être combiné au catalyseur de réduction sélective des oxydes d'azote. Dans ce dernier cas, on parle alors de filtre à particules catalytique capable de catalyser la réduction des oxydes d'azote, et de filtrer les particules de suie contenues dans les gaz d'échappement, ce qui conduit à une réduction du coût et du volume du système.

Afin d'assurer l'élimination des suies filtrées par le filtre à particules catalytique et éviter ainsi les pertes de charge dans la ligne d'échappement du moteur à combustion, il est nécessaire de régénérer thermiquement le filtre à particules catalytique. La régénération thermique du filtre à particules catalytique s'effectue par une augmentation de la température du filtre à particules catalytique jusqu'à obtenir la combustion des suies. Pour un véhicule diesel, une telle régénération intervient après une certaine de kilomètres en moyenne.

Cependant, même si l'efficacité du matériau catalytique contenu dans le filtre à particules catalytique est accrue par l'augmentation de la température, la régénération conduit malgré tout à une libération importante, dans les gaz sortant du filtre à particules catalytique, de l'agent réducteur utilisé pour réduire les oxydes d'azote. Or, cet agent réducteur, généralement l'ammoniac, est particulièrement odorant et toxique.

La demande de brevet FR 2 895 445 décrit un tel système dans lequel un filtre à particules catalytique est monté sur la ligne d'échappement d'un moteur à combustion. Un injecteur d'agent réducteur est monté en amont dudit filtre, et le système comprend un moyen de commande apte à diminuer, voire interrompre, les injections d'agent réducteur dans la ligne d'échappement avant et lors des régénérations thermique du filtre à particules catalytique, afin d'éviter les éventuelles fuites d'ammoniac. Cependant, l'arrêt de l'injection de l'agent réducteur pendant les phases de régénération diminue l'efficacité de traitement des oxydes d'azote, qui se retrouvent donc en plus grande quantité dans les gaz d'échappement rejetés dans l'atmosphère. Le document US2007277507 décrit un système analogue.

La présente invention a pour objet de résoudre les problèmes techniques énoncés précédemment. En particulier, l'invention a pour but de proposer un système permettant de limiter les fuites d'agent réducteur, tout en permettant d'obtenir une meilleure efficacité globale de traitement des suies et des oxydes d'azote.

Selon un aspect, il est proposé un système de traitement des gaz d'échappement émis par un moteur à combustion interne, comprenant un filtre à particules catalytique apte à catalyser la réduction des oxydes d'azote, monté dans la ligne d'échappement du moteur, un dispositif d'injection d'un agent réducteur dans la ligne d'échappement, monté en amont du filtre à particules catalytique, et une unité de contrôle électronique apte à commander l'injection de l'agent réducteur dans la ligne d'échappement.

Le système comprend également un dispositif de réduction catalytique des oxydes d'azote, monté en aval du filtre à particules catalytique. Le catalyseur de réduction des oxydes d'azote peut être de volume réduit et n'est utilisé que pour récupérer l'excédent d'agent réducteur issu du filtre à particules catalytique, lors des régénérations thermiques de ce dernier. On réduit ainsi la quantité d'agent réducteur libérée dans les gaz d'échappement, ainsi que la quantité d'oxydes d'azote, ce qui permet d'améliorer l'efficacité globale du système.

Le système comprend également un moyen de détermination de la température du filtre à particules catalytique et l'unité de contrôle électronique comprend un premier moyen de commande apte à commander l'injection de l'agent réducteur dans la ligne d'échappement pour obtenir une quantité de consigne d'agent réducteur stockée dans le filtre à particules catalytique correspondant à une température du filtre à particules catalytique inférieure à un seuil, et un deuxième moyen de commande apte à commander l'injection de l'agent réducteur dans la ligne d'échappement pour obtenir une quantité de consigne d'agent réducteur stockée dans le dispositif de réduction catalytique des oxydes d'azote correspondant à une température du filtre à particules catalytique supérieure audit seuil.

Ainsi, le premier et le deuxième moyens de commande permettent, en fonction de la température du filtre à particules catalytique, de commander l'injection d'agent réducteur dans la ligne d'échappement de manière à : réguler et optimiser la quantité d'agent réducteur stockée dans le filtre à particules catalytique (cas où le filtre à particules catalytique présente une température inférieure à la température de régénération thermique, et peut donc catalyser la réduction sélective des oxydes d'azote), ou bien réguler et optimiser la quantité d'agent réducteur stockée dans le dispositif de réduction catalytique sélective des oxydes d'azote (cas où le filtre à particules catalytique présente une température supérieure à la température de régénération thermique, et libère donc des agents réducteurs dans les gaz d'échappement). Ainsi, le dispositif de réduction catalytique sélective des oxydes d'azote est utilisé de manière avantageuse en adaptant la commande d'injection de l'agent réducteur en fonction des plages de température du filtre à particules catalytique. Le système permet ainsi de réguler les quantités d'agent réducteur stockées dans le filtre à particules catalytique et dans le dispositif de réduction catalytique sélective des oxydes d'azote. Les quantités d'agent réducteur injectées et stockées dans les différents catalyseurs sont adaptées en fonction de la température (i.e. en fonction du mode de fonctionnement du filtre à particules catalytique) de manière à prévenir d'éventuelles fuites d'agent réducteur, tout en préservant l'efficacité de traitement des NOx par le système.

Préférentiellement, le premier moyen de commande comprend un moyen de détermination de la quantité de consigne d'agent réducteur stockée dans le filtre à particules catalytique en fonction de la température du filtre à particules catalytique, du débit des gaz d'échappement et du débit d'oxydes d'azote, et le deuxième moyen de commande comprend un moyen de détermination de la quantité de consigne d'agent réducteur stockée dans le dispositif de réduction catalytique des oxydes d'azote, en fonction de la température du filtre à particules catalytique, du débit des gaz d'échappement et du débit d'oxydes d'azote.

La quantité de consigne d'agent réducteur stockée dans le filtre à particules catalytique ou dans dispositif de réduction catalytique sélective des oxydes d'azote est déterminée en fonction des conditions de fonctionnement du filtre à particules catalytique ou du dispositif de réduction catalytique sélective des oxydes d'azote. Ainsi, selon les conditions de fonctionnement, ces quantités de consigne d'agent réducteur stockées peuvent varier, et donc changer la commande d'injection de l'agent réducteur dans la ligne d'échappement. Ces quantités sont notamment déterminées de manière à conférer au filtre à particules catalytique ou au dispositif de réduction catalytique sélective des oxydes d'azote une efficacité élevée de traitement des oxydes d'azote, dans les conditions de fonctionnement données.

Préférentiellement, l'unité de contrôle électronique comprend un moyen d'estimation de la quantité effective d'agent réducteur stockée dans le filtre à particules catalytique et de la quantité effective d'agent réducteur stockée dans le dispositif de réduction catalytique des oxydes d'azote. De plus, le premier moyen de commande comprend un moyen de correction de la commande d'injection en agent réducteur en fonction de l'écart entre la quantité de consigne et la quantité effective d'agent réducteur stockée dans le filtre à particules catalytique, et le deuxième moyen de commande comprend un moyen de correction de la commande d'injection en agent réducteur en fonction de l'écart entre la quantité de consigne et la quantité effective d'agent réducteur stockée dans le dispositif de réduction catalytique des oxydes d'azote. En plus des quantités de consigne d'agent réducteur stockées, l'unité de contrôle électronique détermine également les quantités d'agent réducteur effectivement stockées dans les deux dispositifs de traitement des oxydes d'azote (filtre à particules catalytique et dispositif de réduction catalytique sélective des oxydes d'azote) afin de déterminer la quantité d'agent réducteur à injecter dans la ligne d'échappement.

Le système peut comprendre également un dispositif catalyseur d'oxydation monté dans la ligne d'échappement, en amont du moyen d'injection d'agent réducteur.

Le système peut comprendre également un capteur monté en aval du dispositif de réduction catalytique sélective et apte à mesurer le débit global d'oxydes d'azote et d'agent réducteur sortant du dispositif de réduction catalytique sélective.

L'invention concerne également, selon un autre aspect, un procédé de traitement des gaz d'échappement émis par un moteur à combustion interne équipé, dans sa ligne d'échappement, d'un filtre à particules catalytique apte à catalyser la réduction d'oxydes d'azote et d'un dispositif de réduction catalytique des oxydes d'azote monté en aval de filtre à particules catalytique, comprenant :

- une première étape de détermination de la température du filtre à particules catalytique,

- une deuxième étape de piégeage des particules contenues dans les gaz d'échappement et de réduction catalytique sélective des oxydes d'azote contenus dans les gaz d'échappement, lorsque la température du filtre à particules catalytique est inférieure à un seuil et

- une troisième étape de combustion des particules piégées dans le filtre à particules catalytique, puis de réduction catalytique sélective des oxydes d'azote contenus dans les gaz d'échappement, lorsque la température du filtre à particules catalytique est supérieure audit seuil.

Le procédé comprend également l'injection d'un agent réducteur dans la ligne d'échappement comportant :

- une première étape de commande d'injection pour obtenir une quantité de consigne d'agent réducteur stockée dans le filtre à particules catalytique, pendant la deuxième étape, et
- une deuxième étape de commande d'injection pour obtenir une quantité de consigne d'agent réducteur stockée dans le dispositif de réduction catalytique des oxydes d'azote, pendant la troisième étape.

Préférentiellement, la première étape d'injection comprend une étape de détermination de la quantité de consigne d'agent réducteur stockée dans le filtre à particules catalytique en fonction de la température du filtre à particules catalytique, du débit des gaz d'échappement et du débit d'oxydes d'azote.

Préférentiellement, la première étape d'injection comprend une étape d'estimation de la quantité effective d'agent réducteur stockée dans le filtre à particules catalytique et une étape de correction de la commande d'injection en fonction de l'écart entre la quantité de consigne et la quantité effective d'agent réducteur stockée dans le filtre à particules catalytique.

Préférentiellement, la deuxième étape d'injection comprend une étape de détermination de la quantité de consigne d'agent réducteur stockée dans le dispositif de réduction catalytique des oxydes d'azote, en fonction de la température du filtre à particules catalytique, du débit des gaz d'échappement et du débit d'oxydes d'azote.

Préférentiellement, la deuxième étape d'injection comprend une étape d'estimation de la quantité effective d'agent réducteur stockée dans le dispositif de réduction catalytique des oxydes d'azote et une étape de correction de la commande d'injection en agent réducteur en fonction de l'écart entre la quantité de consigne et la quantité effective d'agent réducteur stockée dans le dispositif de réduction catalytique des oxydes d'azote.

D'autres avantages et caractéristiques de l'invention apparaîtront à l'examen de la description détaillée d'un mode de réalisation de l'invention, pris à titre d'exemple nullement limitatif, et des dessins annexés, sur lesquels :

- la figure 1 représente, de manière schématique, un système de post-traitement des gaz d'échappement selon l'invention ; et
- la figure 2 représente un schéma synoptique illustrant l'architecture d'une partie d'une unité de contrôle.

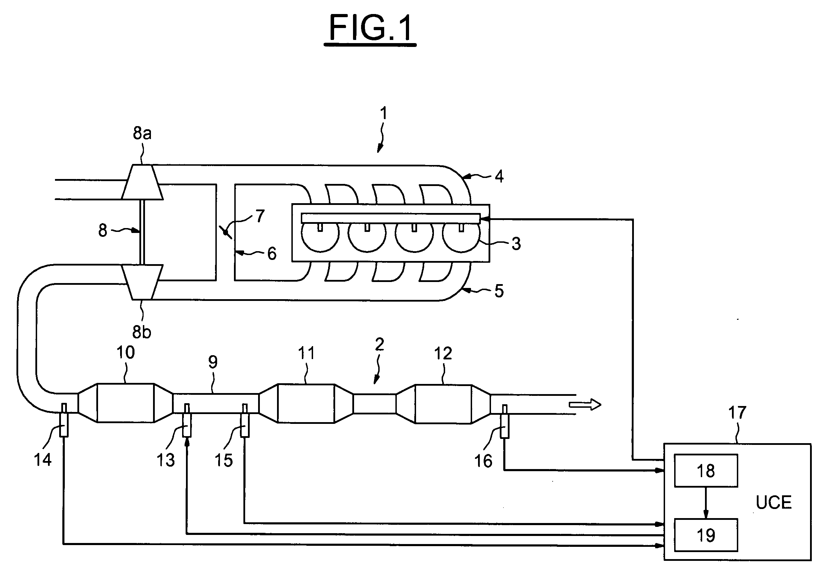

Sur la figure 1, on a représenté, de manière très schématique, la structure générale d'un moteur à combustion interne 1 et d'un système de post-traitement des gaz d'échappement 2. Le moteur à combustion interne 1 comprend, par exemple, au moins un cylindre 3, un collecteur d'admission 4, un collecteur d'échappement 5, un circuit de re-circulation des gaz d'échappement 6 muni d'une vanne de re-circulation des gaz d'échappement 7, et un système de turbo compression 8 comportant un compresseur 8a et une turbine 8b.

Le système de post-traitement des gaz d'échappement 2 comprend une ligne d'échappement 9 sur laquelle sont montés, dans le sens d'écoulement des gaz d'échappement dans la ligne 9, un catalyseur d'oxydation 10, un filtre à particules catalytique 11 et un dispositif de réduction catalytique sélective d'oxydes d'azote 12 (en anglais : Selective Catalytic Reduction SCR). Par ailleurs, un injecteur 13 d'un agent de réduction, par exemple de l'urée, est monté en aval du catalyseur d'oxydation 10 et en amont du filtre à particules catalytique 11. La ligne d'échappement 9 peut également comprendre un moyen de mélange (non représenté) monté entre l'injecteur 13 et le filtre à particules catalytique 11, et permettant d'homogénéiser le mélange constitué des gaz d'échappement et de l'agent de réduction. On notera que le catalyseur d'oxydation 10 pourrait être omis sans modifier l'invention.

Le système 2 comprend également un premier capteur de température 14 monté en amont du catalyseur d'oxydation 10 et permettant de connaitre la température des gaz alimentant le catalyseur d'oxydation 10 (et donc la température du catalyseur d'oxydation 10) pendant les différentes phases de traitement des gaz d'échappement. Le système 2 comprend également un deuxième capteur de température 15 monté en amont du filtre à particules catalytique 11 et permettant de connaitre la température des gaz alimentant le filtre à particules catalytique 11 (et donc la température du filtre à particules catalytique 11) pendant les différentes phases de traitement des gaz d'échappement. Le système 2 peut également comprendre un capteur de NOx 16, monté en aval du dispositif de réduction catalytique sélective des oxydes d'azote 12. Le capteur 16 permet notamment de mesurer le débit d'oxydes d'azote sortant de la ligne d'échappement 9 en fonctionnement.

Une unité de contrôle électronique UCE 17 assure le traitement des différents signaux et la commande de la combustion, notamment en envoyant des valeurs de consigne à l'injecteur de carburant du cylindre 3 et en commandant la quantité d'air alimentant les cylindres 3 et le débit des gaz d'échappement recyclés par action sur la vanne 7.

L'unité de contrôle électronique 17 peut également commander l'injecteur d'agent réducteur 13 afin d'introduire dans la ligne d'échappement 9 la quantité souhaitée d'agent réducteur.

L'unité de contrôle électronique 17 comprend un moyen 18 d'estimation de la quantité effective d'agent réducteur, par exemple l'ammoniac, $\hat{m}_{NH_3}^{11}$ stockée dans le filtre à particules catalytique 11 et de la quantité effective d'agent réducteur (ammoniac) $\hat{m}_{NH_3}^{12}$ stockée dans le dispositif de réduction catalytique sélective des oxydes d'azote 12. Le moyen 18 estime notamment les quantités $\hat{m}_{NH_3}^{11}$ et $\hat{m}_{NH_3}^{12}$ en fonction des valeurs fournies par le capteur 16 qui mesure le débit des oxydes d'azote en sortie du dispositif de réduction catalytique sélective 12, et en fonction de la quantité d'agent réducteur introduite dans la ligne d'échappement 9 par l'injecteur 13.

Les valeurs $\hat{m}_{NH_3}^{11}$ 3 et $\hat{m}_{NH_3}^{12}$ 3 sont alors transmises à un moyen d'élaboration 19 de la commande de l'injecteur 13 d'agent réducteur dans la ligne d'échappement 9.

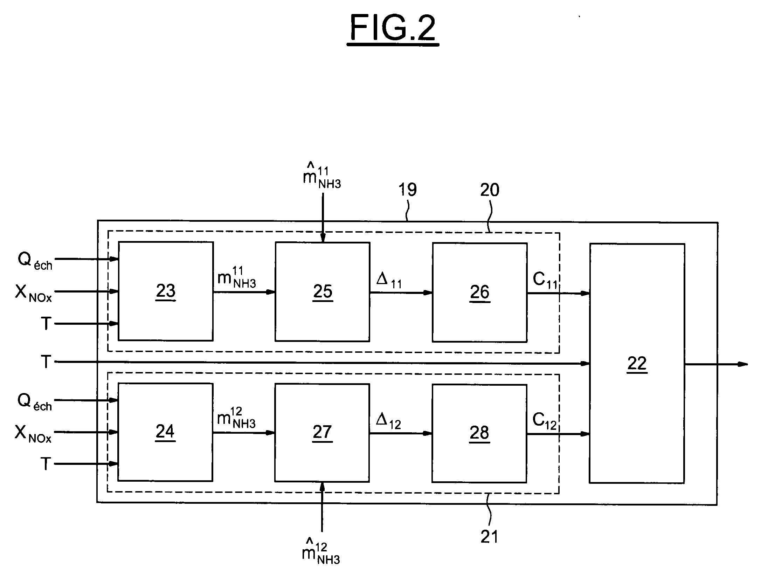

Ainsi, comme représenté sur la figure 2, le moyen d'élaboration 19 reçoit en entrées : les valeurs $\hat{m}_{NH_3}^{11}$ et $\hat{m}_{NH_3}^{12}$ déterminées et transmises par le moyen d'estimation 18, la valeur de la température des gaz mesurée par le deuxième capteur 15, le taux $X_{NOx}$ d'oxydes d'azote dans les gaz d'échappement et les valeurs de débit des gaz d'échappement $Q_{\text{éch}}$ circulant dans la ligne d'échappement 9. Le moyen d'élaboration 19 comprend un premier moyen de commande 20, un deuxième moyen de commande 21 et un moyen de sélection 22 (voir figure 2).

Le premier moyen de commande 20 comprend un moyen de détermination 23 d'une quantité de consigne d'agent réducteur stockée dans le filtre à particules catalytique 11. Le moyen de détermination 23 reçoit en entrée les valeurs T de température des gaz mesurées par le deuxième capteur 15, le taux $X_{NOx}$ d'oxydes d'azote dans les gaz d'échappement et les valeurs de débit des gaz d'échappement $Q_{\text{éch}}$, et détermine, à partir d'une cartographie ou d'un algorithme, une quantité de consigne $m_{NH_3}^{11}$ d'agent réducteur stockée dans le filtre à particules catalytique 11 permettant d'obtenir une efficacité élevée de traitement des oxydes d'azote, une faible consommation d'agent réducteur et une faible fuite d'ammoniac en sortie du filtre à particules catalytique 11. Ainsi la quantité de consigne $m_{NH_3}^{11}$ est établie en optimisant les paramètres précités.

La quantité de consigne $m_{NH_3}^{11}$ est alors transmise à un moyen de comparaison 25 qui reçoit également la valeur $\hat{m}_{NH_3}^{11}$ déterminée par le moyen d'estimation 18. Le moyen de comparaison 25 calcule l'écart entre les deux valeurs : $\Delta_{11} = \hat{m}_{NH_3}^{11} - m_{NH_3}^{11}$, et le transmet à un moyen de correction 26 capable de corriger la commande d'injection en agent réducteur en fonction de l'écart $\Delta_{11}$. Le moyen de correction 26 détermine ainsi une commande d'injection $C_{11}$ permettant d'obtenir la quantité de consigne d'agent réducteur stockée dans le filtre à particules catalytique 11, en fonction de la quantité effective d'agent réducteur déjà stockée dans ledit filtre 11. En particulier, si la quantité $\hat{m}_{NH_3}^{11}$ est inférieure à $m_{NH_3}^{11}$, la commande $C_{11}$ augmente l'injection d'agent réducteur dans la ligne d'échappement. Si la quantité $\hat{m}_{NH_3}^{11}$ est supérieure à $m_{NH_3}^{11}$, la commande $C_{11}$ ne déclenche pas d'injection d'agent réducteur dans la ligne d'échappement. La commande d'injection $C_{11}$ est transmise au moyen de sélection 22.

Le deuxième moyen de commande 21 comprend un moyen de détermination 24 d'une quantité de consigne d'agent réducteur stockée dans le dispositif de réduction catalytique sélective 12. Le moyen de détermination 24 reçoit en entrée les valeurs T de température des gaz mesurées par le deuxième capteur 15, le taux $X_{NOx}$ d'oxydes d'azote dans les gaz d'échappement et les valeurs de débit des gaz d'échappement $Q_{\text{éch}}$, et détermine, à partir d'une cartographie ou d'un algorithme, la quantité de consigne $m_{NH_3}^{12}$ d'agent réducteur stockée dans le dispositif de réduction catalytique sélective des oxydes d'azote 12 permettant d'obtenir une efficacité élevée de traitement des oxydes d'azote, une faible consommation d'agent réducteur et une fuite faible d'ammoniac en sortie du dispositif de réduction catalytique sélective des oxydes d'azote 12. Ainsi la quantité de consigne $m_{NH_3}^{12}$ est établie en optimisant les paramètres précités.

La quantité de consigne $m_{NH_3}^{12}$ est transmise à un moyen de comparaison 27 qui reçoit également la valeur $\hat{m}_{NH_3}^{12}$ déterminée par le moyen d'estimation 18. Le moyen de comparaison 27 calcule l'écart entre les deux valeurs : $\Delta_{12} = \hat{m}_{NH_3}^{12} - m_{NH_3}^{12}$, et le transmet à un moyen de correction 28 capable de corriger la commande d'injection en agent réducteur en fonction de l'écart $\Delta_{12}$. Le moyen de correction 28 détermine ainsi une commande d'injection $C_{12}$ permettant d'obtenir la quantité de consigne d'agent réducteur stockée dans le dispositif de réduction catalytique sélective 12, en fonction de la quantité effective d'agent réducteur déjà stockée dans ledit dispositif 12. En particulier, si la quantité $\hat{m}_{NH_3}^{12}$ est inférieure à $m_{NH_3}^{12}$, la commande $C_{12}$ augmente l'injection d'agent réducteur dans la ligne d'échappement. Si la quantité $\hat{m}_{NH_3}^{12}$ est supérieure à $m_{NH_3}^{12}$, la commande $C_{12}$ ne déclenche pas d'injection d'agent réducteur dans la ligne d'échappement. La commande d'injection $C_{12}$ est transmise au moyen de sélection 22.

Le moyen de sélection 22 reçoit en entrées les

commandes d'injection C_{11} et C_{12}, ainsi que les valeurs T de température des gaz mesurées par le deuxième capteur 15. Lorsque la température T est inférieure à une température seuil, le moyen de sélection 22 commande l'injecteur 13 à partir de la commande C_{11}. Lorsque la température T est supérieure à une température seuil, le moyen de sélection 22 commande l'injecteur 13 à partir de la commande C_{12}.

Ainsi, tant que la température T du filtre à particules catalytique 11 n'a pas atteint la température seuil (correspondant à une régénération thermique du filtre à particules catalytique 11), on régule la quantité d'agent réducteur stockée dans le filtre à particules catalytique 11 de manière à le faire fonctionner aussi efficacement que possible. Les oxydes d'azote sont donc traités principalement par le filtre à particules catalytique 11. Le dispositif de réduction catalytique sélective 12 n'est pas commandé pour être actif (par exemple présente une température inférieure à la température d'activation du matériau catalyseur). Toutefois, s'il est actif, il peut alors traiter les oxydes d'azote résiduels ou capter les traces excédentaires d'agent réducteur relâchées par le filtre à particules catalytique 11.

Lorsque la température T du filtre à particules catalytique 11 a atteint la température seuil (correspondant à une régénération thermique dudit filtre à particules catalytique 11 ou à une température de désorption), des fuites d'agent réducteur se produisent en sortie du filtre à particules catalytique 11. On régule alors la quantité d'agent réducteur stockée dans le dispositif de réduction catalytique sélective 12 de manière à le faire fonctionner aussi efficacement que possible, en tenant compte des fuites d'agent réducteur du filtre à particules catalytique 11, et on ne régule plus la quantité d'agent réducteur stockée dans le filtre à particules catalytique 11. Les oxydes d'azote sont donc traités principalement par le dispositif de réduction catalytique sélective 12, et les fuites d'agent réducteur du filtre à particules catalytique 11 sont captées par le dispositif de réduction catalytique sélective 12.

Ainsi, grâce au filtre à particules catalytique, au dispositif de réduction catalytique sélective présents dans la ligne d'échappement 9, et à la commande spécifique de ces deux moyens en fonction de la température du filtre à particules catalytique, il devient possible de contrôler et traiter aisément les oxydes d'azote issus du moteur à combustion et les fuites d'agent réducteur provenant du système de traitement.

**Revendications**

1. Système de traitement des gaz d'échappement (2) émis par un moteur à combustion interne, comprenant :

   - un filtre à particules catalytique apte à catalyser la réduction des oxydes d'azote (11), monté dans la ligne d'échappement (9) du moteur,
   - un dispositif de réduction catalytique sélective des oxydes d'azote (12), monté en aval du filtre à particules catalytique (11),
   - un dispositif d'injection (13) d'un agent réducteur dans la ligne d'échappement (9), monté en amont du filtre à particules catalytique (11),
   - un moyen de détermination (15) de la température du filtre à particules catalytique et
   - une unité de contrôle électronique (17) apte à commander l'injection de l'agent réducteur dans la ligne d'échappement (9),

   **caractérisé en ce que** l'unité de contrôle électronique (17) comprend un premier moyen de commande (20) apte à commander l'injection de l'agent réducteur dans la ligne d'échappement pour obtenir une quantité de consigne d'agent réducteur stockée dans le filtre à particules catalytique (11) correspondant à une température du filtre à particules catalytique (11) inférieure à un seuil, et un deuxième moyen de commande (21) apte à commander l'injection de l'agent réducteur dans la ligne d'échappement pour obtenir une quantité de consigne d'agent réducteur stockée dans le dispositif de réduction catalytique sélective des oxydes d'azote (12) correspondant à une température du filtre à particules catalytique (11) supérieure audit seuil.

2. Système de traitement selon la revendication 1, dans lequel le premier moyen de commande (20) comprend un moyen de détermination (23) de la quantité de consigne d'agent réducteur stockée dans le filtre à particules catalytique (11) en fonction de la température du filtre à particules catalytique, du débit des gaz d'échappement et du débit d'oxydes d'azote, et dans lequel le deuxième moyen de commande (21) comprend un moyen de détermination (24) de la quantité de consigne d'agent réducteur stockée dans le dispositif de réduction catalytique sélective des oxydes d'azote (12), en fonction de la température du filtre à particules catalytique, du débit des gaz d'échappement et du débit d'oxydes d'azote.

3. Système de traitement selon la revendication 2, dans lequel l'unité de contrôle électronique (17) comprend un moyen d'estimation (18) de la quantité effective d'agent réducteur stockée dans le filtre à particules catalytique (11) et de la quantité effective d'agent réducteur stockée dans le dispositif de réduction catalytique sélective des oxydes d'azote (12), et dans lequel le premier moyen de commande (20) comprend un moyen de correction (26) de la commande d'injection en agent réducteur en fonction de l'écart entre la quantité de consigne et la quantité effective d'agent réducteur stockée dans le filtre à particules catalytique (11), et dans lequel le deuxième moyen de commande (21) comprend un moyen de correction (28) de la commande d'injection en agent réducteur en fonction de l'écart entre la quantité de consigne et la quantité effective d'agent réducteur stockée dans le dispositif de réduction catalytique sélective des oxydes d'azote (12).

4. Système de traitement (2) selon l'une des revendications 1 à 3, comprenant également un dispositif catalyseur d'oxydation (10) monté dans la ligne d'échappement (9), en amont du moyen d'injection (13) d'agent réducteur.

5. Système de traitement (2) selon l'une des revendications 1 à 4, comprenant également un capteur (16) monté en aval du dispositif de réduction catalytique sélective (12) et apte à mesurer le débit global d'oxydes d'azote et d'agent réducteur sortant du dispositif de réduction catalytique sélective (12).

6. Procédé de traitement des gaz d'échappement émis par un moteur à combustion interne équipé, dans sa ligne d'échappement, d'un filtre à particules catalytique apte à catalyser la réduction d'oxydes d'azote (11) et d'un dispositif de réduction catalytique des oxydes d'azote (12) monté en aval de filtre à particules catalytique (11), comprenant :

   - une première étape de détermination de la température du filtre à particules catalytique (11),
   - une deuxième étape de piégeage des particules contenues dans les gaz d'échappement et de réduction catalytique sélective des oxydes d'azote contenus dans les gaz d'échappement, lorsque la température du filtre à particules catalytique (11) est inférieure à un seuil et
   - une troisième étape de combustion des particules piégées dans le filtre à particules catalytique (11), puis de réduction catalytique sélective des oxydes d'azote contenus dans les gaz d'échappement, lorsque la température du filtre à particules catalytique (11) est supérieure audit seuil,

   **caractérisé en ce que** le procédé comprend également l'injection d'un agent réducteur dans la ligne d'échappement comportant :

   - une première étape de commande d'injection pour obtenir une quantité de consigne d'agent réducteur stockée dans le filtre à particules catalytique (11), pendant la deuxième étape, et
   - une deuxième étape de commande d'injection pour obtenir une quantité de consigne d'agent réducteur stockée dans le dispositif de réduction catalytique sélective des oxydes d'azote (12), pendant la troisième étape.

7. Procédé selon la revendication 6, dans lequel la première étape d'injection comprend une étape de détermination de la quantité de consigne d'agent réducteur stockée dans le filtre à particules catalytique (11) en fonction de la température du filtre à particules catalytique, du débit des gaz d'échappement et du débit d'oxydes d'azote.

8. Procédé selon l'une des revendications 6 ou 7, dans lequel la deuxième étape d'injection comprend une étape de détermination de la quantité de consigne d'agent réducteur stockée dans le dispositif de réduction catalytique sélective des oxydes d'azote, en fonction de la température du filtre à particules catalytique, du débit des gaz d'échappement et du débit d'oxydes d'azote.

9. Procédé selon la revendication 7, dans lequel la première étape d'injection comprend une étape d'estimation de la quantité effective d'agent réducteur stockée dans le filtre à particules catalytique (11) et une étape de correction de la commande d'injection en fonction de l'écart entre la quantité de consigne et la quantité effective d'agent réducteur stockée dans le filtre à particules catalytique (11).

10. Procédé selon la revendication 8, dans lequel la deuxième étape d'injection comprend une étape d'estimation de la quantité effective d'agent réducteur stockée dans le dispositif de réduction catalytique sélective des oxydes d'azote (12) et une étape de correction de la commande d'injection en agent réducteur en fonction de l'écart entre la quantité de consigne et la quantité effective d'agent réducteur stockée dans le dispositif de réduction catalytique sélective des oxydes d'azote (12).

**Patentansprüche**

1. System (2) zur Behandlung der Abgase, die von einem Verbrennungsmotor abgegeben werden, umfassend:

   - einen katalytischen Partikelfilter, der geeignet ist, die Reduktion an Stickoxiden (11) zu katalysieren, der in der Abgasleitung (9) des Motors montiert ist,
   - eine Vorrichtung zur selektiven katalytischen Reduktion der Stickoxide (12), die stromabwärts zu dem katalytischen Partikelfilter (11) montiert ist,
   - eine Vorrichtung (13) zum Einspritzen eines Reduktionsmittels in die Abgasleitung (9), die stromaufwärts zu dem katalytischen Partikelfilter (11) montiert ist,
   - ein Mittel (15) zur Bestimmung der Temperatur des katalytischen Partikelfilters und
   - eine elektronische Kontrolleinheit (17), die geeignet ist, das Einspritzen des Reduktionsmittels in die Abgasleitung (9) zu steuern,

**dadurch gekennzeichnet, dass** die elektronische Kontrolleinheit (17) ein erstes Steuermittel (20), das geeignet ist, das Einspritzen des Reduktionsmittels in die Abgasleitung zu steuern, um eine Sollmenge an Reduktionsmittel zu erhalten, die in dem katalytischen Partikelfilter (11) gespeichert ist, entsprechend einer Temperatur des katalytischen Partikelfilters (11) unter einer Schwelle, und ein zweites Steuermittel (21) umfasst, das geeignet ist, das Einspritzen des Reduktionsmittels in die Abgasleitung zu steuern, um eine Sollmenge an Reduktionsmittel zu erhalten, die in der Vorrichtung zur selektiven katalytischen Reduktion der Stickoxide (12) gespeichert ist, entsprechend einer Temperatur des katalytischen Partikelfilters (11) über der Schwelle.

2. Behandlungssystem nach Anspruch 1, bei dem das erste Steuermittel (20) ein Mittel (23) zur Bestimmung der Sollmenge an Reduktionsmittel, die in dem katalytischen Partikelfilter (11) gespeichert ist, in Abhängigkeit von der Temperatur des katalytischen Partikelfilters, der Durchgangsmenge an Abgasen und der Durchgangsmenge an Stickoxiden umfasst, und bei dem das zweite Steuermittel (21) ein Mittel (24) zur Bestimmung der Sollmenge an Reduktionsmittel, die in der Vorrichtung zur selektiven katalytischen Reduktion der Stickoxide (12) gespeichert ist, in Abhängigkeit von der Temperatur des katalytischen Partikelfilters, der Durchgangsmenge an Abgasen und der Durchgangsmenge an Stickoxiden umfasst.

3. Behandlungssystem nach Anspruch 2, bei dem die elektronische Kontrolleinheit (17) ein Mittel (18) zur Bewertung der effektiven Menge an Reduktionsmittel, die in dem katalytischen Partikelfilter (11) gespeichert ist, und der effektiven Menge an Reduktionsmittel, die in der Vorrichtung zur selektiven katalytischen Reduktion der Stickoxide (12) gespeichert ist, umfasst, und bei dem das erste Steuermittel (20) ein Mittel (26) zur Korrektur der Steuerung des Einspritzens von Reduktionsmittel in Abhängigkeit von der Abweichung zwischen der Sollmenge und der effektiven Menge an Reduktionsmittel, die in dem katalytischen Partikelfilter (11) gespeichert ist, umfasst, und bei dem das zweite Steuermittel (21) ein Mittel (28) zur Korrektur der Steuerung des Einspritzens von Reduktionsmittel in Abhängigkeit von der Abweichung zwischen der Sollmenge und der effektiven Menge an Reduktionsmittel, die in der Vorrichtung zur selektiven katalytischen Reduktion der Stickoxide (12) gespeichert ist, umfasst.

4. Behandlungssystem (2) nach einem der Ansprüche 1 bis 3, ebenfalls umfassend eine Oxidations-Katalysatorvorrichtung (10), die in der Abgasleitung (9) stromaufwärts zu dem Mittel (13) zum Einspritzen eines Reduktionsmittels montiert ist.

5. Behandlungssystem (2) nach einem der Ansprüche 1 bis 4, ebenfalls umfassend einen Sensor (16), der stromabwärts zu der Vorrichtung zur selektiven katalytischen Reduktion (12) angeordnet und geeignet ist, die Gesamtdurchgangsmenge an Stickoxiden und Reduktionsmittel, die aus der Vorrichtung zur selektiven katalytischen Reduktion (12) austritt, zu messen.

6. Verfahren zur Behandlung der Abgase, die von einem Verbrennungsmotor abgegeben werden, der in seiner Abgasleitung mit einem katalytischen Partikelfilter, der geeignet ist, die Reduktion an Stickoxiden (11) zu katalysieren, und einer Vorrichtung zur katalytischen Reduktion der Stickoxide (12), die stromabwärts zu dem katalytischen Partikelfilter (11) montiert ist, ausgestattet ist, umfassend:

   - einen ersten Schritt der Bestimmung der Temperatur des katalytischen Partikelfilters (11),
   - einen zweiten Schritt des Einfangens der in den Abgasen enthaltenen Partikel und der selektiven katalytischen Reduktion der in den Abgasen enthaltenen Stickoxide, wenn die Temperatur des katalytischen Partikelfilters (11) niedriger als eine Schwelle ist, und
   - einen dritten Schritt der Verbrennung der in dem katalytischen Partikelfilter (11) eingefangenen Partikel, dann der selektiven katalytischen Reduktion der in den Abgasen enthaltenen Stickoxide, wenn die Temperatur des katalytischen Partikelfilters (11) höher als die Schwelle ist,

   **dadurch gekennzeichnet, dass** das Verfahren auch das Einspritzen eines Reduktionsmittels in die Abgasleitung umfasst, bestehend in:

   - einem ersten Schritt der Steuerung des Einspritzens, um eine Sollmenge an in dem katalytischen Partikelfilter (11) gespeichertem Reduktionsmittel während des zweiten Schrittes zu erhalten,
   - einem zweiten Schritt der Steuerung des Einspritzens, um eine Sollmenge an in der Vorrichtung zur selektiven katalytischen Reduktion der Stickoxide (12) gespeichertem Reduktionsmittel während des dritten Schrittes zu erhalten.

7. Verfahren nach Anspruch 6, bei dem der erste Schritt des Einspritzens einen Schritt der Bestimmung der Sollmenge an in dem katalytischen Partikelfilter (11) gespeichertem Reduktionsmittel in Abhängigkeit von der Temperatur des katalytischen Partikelfilters, der Durchgangsmenge an Abgasen und der Durchgangsmenge an Stickoxiden umfasst.

8. Verfahren nach einem der Ansprüche 6 oder 7, bei dem der zweite Schritt des Einspritzens einen Schritt der Bestimmung der Sollmenge an in der Vorrichtung zur selektiven katalytischen Reduktion der Stickoxide gespeichertem Reduktionsmittel in Abhängigkeit von der Temperatur des katalytischen Partikelfilters, der Durchgangsmenge an Abgasen und der Durchgangsmenge an Stickoxiden umfasst.

9. Verfahren nach Anspruch 7, bei dem der erste Schritt des Einspritzens einen Schritt der Bewertung der effektiven Menge an in dem katalytischen Partikelfilter (11) gespeichertem Reduktionsmittel und einen Schritt der Korrektur der Steuerung des Einspritzens in Abhängigkeit von der Abweichung zwischen der Sollmenge und der effektiven Menge an in dem katalytischen Partikelfilter (11) gespeichertem Reduktionsmittel umfasst.

10. Verfahren nach Anspruch 8, bei dem der zweite Schritt des Einspritzens einen Schritt der Bewertung der effektiven Menge an in der Vorrichtung zur selektiven katalytischen Reduktion der Stickoxide (12) gespeichertem Reduktionsmittel und einen Schritt der Korrektur der Steuerung des Einspritzens von Reduktionsmittel in Abhängigkeit von der Abweichung zwischen der Sollmenge und der effektiven Menge an in der Vorrichtung zur selektiven katalytischen Reduktion der Stickoxide (12) gespeichertem Reduktionsmittel umfasst.

**Claims**

1. Treatment system for the exhaust gases (2) emitted by an internal combustion engine, comprising:

   - a catalytic particulate filter that can catalyze the reduction of nitrogen oxides (11), mounted in the exhaust line (9) of the engine,
   - a selective catalytic reduction device for nitrogen oxides (12), mounted downstream of the catalytic particulate filter (11),
   - an injection device (13) for a reducing agent in the exhaust line (9), mounted upstream of the catalytic particulate filter (11),
   - a means of determining (15) the temperature of the catalytic particulate filter and
   - an electronic control unit (17) that can order the injection of the reducing agent into the exhaust line (9),

   **characterized in that** the electronic control unit (17) comprises a first control means (20) that can order the injection of the reducing agent into the exhaust line to give a specified quantity of reducing agent stored in the catalytic particulate filter (11) corresponding to a temperature of the catalytic particulate filter (11) less than a threshold, and a second control means (21) that can order the injection of the reducing agent into the exhaust line to give a specified quantity of reducing agent stored in the selective catalytic reduction device for nitrogen oxides (12) corresponding to a temperature of the catalytic particulate filter (11) greater than said threshold.

2. Treatment system according to Claim 1, in which the first control means (20) comprises a means of determining (23) the specified quantity of reducing agent stored in the catalytic particulate filter (11) as a function of the temperature of the catalytic particulate filter, the flow rate of the exhaust gases and the flow rate of the nitrogen oxides, and in which the second control means (21) comprises a means of determining (24) the specified quantity of reducing agent stored in the selective catalytic reduction device for nitrogen oxides (12), as a function of the temperature of the catalytic particulate filter, the flow rate of the exhaust gases and the flow rate of the nitrogen oxides.

3. Treatment system according to Claim 2, in which the electronic control unit (17) comprises a means of estimating (18) the effective quantity of reducing agent stored in the catalytic particulate filter (11) and of the effective quantity of reducing agent stored in the selective catalytic reduction device for nitrogen oxides (12), and in which the first control means (20) comprises a means of correcting (26) the reducing agent injection order as a function of the difference between the specified quantity and the effective quantity of reducing agent stored in the catalytic particulate filter (11), and in which the second control means (21) comprises a means of correcting (28) the reducing agent injection order as a function of the difference between the specified quantity and the effective quantity of reducing agent stored in the selective catalytic reduction device for nitrogen oxides (12).

4. Treatment system (2) according to one of Claims 1 to 3, further comprising an oxidation catalyst device (10) mounted in the exhaust line (9), upstream of the means of injecting (13) reducing agent.

5. Treatment system (2) according to one of Claims 1 to 4, further comprising a sensor (16) mounted downstream of the selective catalytic reduction device (12) and that can measure the global flow rate of nitrogen oxides and reducing agent exiting the selective catalytic reduction device (12).

6. Treatment method for exhaust gases emitted by an internal combustion engine equipped, in its exhaust line, with a catalytic particulate filter that can catalyze the reduction of nitrogen oxides (11) and a catalytic reduction device for nitrogen oxides (12) mounted downstream of the catalytic particulate filter (11), comprising:

- a first step of determining the temperature of the catalytic particulate filter (11),
- a second step of trapping the particulates contained in the exhaust gases and selective catalytic reduction of the nitrogen oxides contained in the exhaust gases, when the temperature of the catalytic particulate filter (11) is less than a threshold and
- a third step of combusting the particulates trapped in the catalytic particulate filter (11), and then of selective catalytic reduction of the nitrogen oxides contained in the exhaust gases, when the temperature of the catalytic particulate filter (11) is greater than said threshold,

**characterized in that** the method also comprises the injection of a reducing agent into the exhaust line including:

- a first step of ordering an injection to give a specified quantity of reducing agent stored in the catalytic particulate filter (11), during the second step, and
- a second step of ordering an injection to give a specified quantity of reducing agent stored in the selective catalytic reduction device for nitrogen oxides (12), during the third step.

7. Method according to Claim 6, in which the first step of injection comprises a step of determining the specified quantity of reducing agent stored in the catalytic particulate filter (11) as a function of the catalytic particulate filter temperature, the flow rate of the exhaust gases and the flow rate of the nitrogen oxides.

8. Method according to either of Claims 6 and 7, in which the second step of injection comprises a step of determining the specified quantity of reducing agent stored in the selective catalytic reduction device for nitrogen oxides, as a function of the catalytic particulate filter temperature, the flow rate of the exhaust gases and the flow rate of the nitrogen oxides.

9. Method according to Claim 7, in which the first step of injection comprises a step of estimating the effective quantity of reducing agent stored in the catalytic particulate filter (11) and a step for correcting the injection order as a function of the difference between the specified quantity and the effective quantity of reducing agent stored in the catalytic particulate filter (11).

10. Method according to Claim 8, in which the second step of injection comprises a step of estimating the effective quantity of reducing agent stored in the selective catalytic reduction device for nitrogen oxides (12), and a step for correcting the reducing agent injection order as a function of the difference between the specified quantity and the effective quantity of reducing agent stored in the selective catalytic reduction device for nitrogen oxides (12).

# FIG.1

# FIG.2

$\hat{m}^{11}_{NH3}$

19 20

$Q_{éch}$
$X_{NOx}$
T

23 → $m^{11}_{NH3}$ → 25 → $\Delta_{11}$ → 26 → $C_{11}$

T

$Q_{éch}$
$X_{NOx}$
T

24 → $m^{12}_{NH3}$ → 27 → $\Delta_{12}$ → 28 → $C_{12}$

$\hat{m}^{12}_{NH3}$

21

22

EP 2 877 720 B1

**RÉFÉRENCES CITÉES DANS LA DESCRIPTION**

**Documents brevets cités dans la description**

- FR 2895445
- US 2007277507 A